## Europäisches Patentamt
## European Patent Office
## Office européen des brevets

(11) Publication number: **0 276 927**
**A2**

# (12) EUROPEAN PATENT APPLICATION

(21) Application number: 88300300.6

(22) Date of filing: 14.01.88

(51) Int. Cl.4: **C 08 G 18/48**
C 08 G 18/76, C 08 G 71/02,
C 08 G 18/10, C 08 G 18/14
//(C08L71/02,35:04),
(C08L71/02,35:06),(C08L75/08,
35:04),(C08L75/08,35:06)

(30) Priority: 22.01.87 GB 8701372

(43) Date of publication of application:
03.08.88 Bulletin 88/31

(84) Designated Contracting States:
BE DE ES FR GB IT NL SE

(71) Applicant: **BP Chemicals Limited**
**Belgrave House 76 Buckingham Palace Road**
**London, SW1W 0SU (GB)**

(72) Inventor: **Brasington, Robert David BP Chemicals Suisse
S.A.**
**Chem. and Plastics Laboratory 11-13 Rue de Veyrot
CH-1217 Meyrin 2 (CH)**

**Lidy, Werner August BP Chemicals Suisse S.A.**
**Chem. and Plastics Laboratory 11-13 Rue de Veyrot
CH-1217 Meyrin 2 (CH)**

(74) Representative: **Denbigh, Keith Warwick et al**
**BP INTERNATIONAL LIMITED Patents Division Chertsey
Road**
**Sunbury-on-Thames Middlesex, TW16 7LN (GB)**

(54) Storage stable isocyanate prepolymers.

(57) Storage stable prepolymers of pure or crude MDI are provided. The prepolymers are prepared by reacting the pure or crude MDI with a polymer polyol comprising (1) 50 to 99% by weight of a polyoxyalkylene polyol having an average functionality in the range 1,000 to 10,000 and comprising 1 to 80% by weight ethylene oxide and (2) 1 to 50% by weight of a polymer of one or more vinyl monomers.

Cold cure flexible polyurethane foams produced from such prepolymers have a more open cellular structure relative to prior art materials.

**Description**

## STORAGE STABLE ISOCYANATE PREPOLYMERS

The present invention relates to storage stable prepolymers of diphenylmethane diisocyanate, to a process for the preparation of such prepolymers and their use in the manufacture of polyurethane foams and elastomers.

The manufacture of polyurethane foam by reacting a polyfunctional isocyanate with a compound containing at least two hydrogen atoms which are reactive with isocyanate (e.g. a polyfunctional alcohol or amine) is known. Of those polyfunctional isocyanates which are commercially available, the isomeric forms of diphenylmethane diisocyanates have attracted particular attention. Diphenylmethane diisocyanates, which are available either as individual isomers or mixtures thereof (pure MDI) or further admixed with polymethylene polyphenyl polyisocyanates (crude MDI) are typically prepared by the phosgenation of the diamines or polyamines formed by condensing aniline with formaldehyde in the presence of a strong acid.

A problem is encountered using either pure or crude MDI in making polyurethane foam since such materials are either solid at room temperature or tend to solidify or precipitate solids at typical storage temperatures. When solid, such materials become difficult to manipulate. Hence it is desirable to modify such materials so that they remain liquid not only at room temperature but also at as low a temperature as likely to be encountered in stores, warehouses etc.

One approach to solving this problem is to make prepolymers of the diphenylmethane diisocyanates with a polyfunctional alcohol. For example, EP 10850 discloses prepolymers prepared by reacting the diphenylmethane diisocyanate with a mixture of a polyoxypropylene diol or triol and a polyoxyethylene diol or triol. The prepolymer formed, which is a liquid, can be used as a solvent for further unreacted diphenylmethane diisocyanate.

EP 22617 teaches a similar process using a polyoxyalkylene glycol having at least 50% ethylene oxide randomly distributed whilst DE 3241450 teaches a process using a polyoxyalkylene polyol having 5-30% ethylene oxide.

Another approach described in DE 2717633 involves reducing the 4-4' isomer content of pure or crude MDI as this is the highest melting of the isomers.

A new diphenylmenthane diisocyanate prepolymer composition has now been devised. The prepolymer is obtained by reacting the diphenylmethane diisocyanate with a vinyl polymer modified polyoxyalkylene polyol (known in the art as a polymer polyol or graft polyol). Relative to the prior art prepolymers, compositions comprising the diphenylmethane diisocyanate prepolymers of the present invention produce cold cure flexible polyurethane foams having a more open cellular structure whilst at the same time being stable under most storage conditions.

Accordingly the present invention provides a liquid isocyanate prepolymer comprising the reaction product of a diphenylmethane diisocyanate and a polyol characterised in that the polyol is a polymer polyol comprising (1) 50 to 99% by weight of a polyoxyalkylene polyol having an average functionality in the range 1 to 8, a molecular weight in the range 1,000 to 10,000 and comprising 1 to 80% by weight ethylene oxide, and (2) 1 to 50% by weight of a polymer of one or more vinyl monomers.

By the term diphenylmethane diisocyanate is meant any pure MDI, which is defined as the separate isomers of diphenylmethane diisocyanate or mixtures thereof, or any crude MDI. Crude MDI is defined as a mixture consisting of 25-90% by weight preferably 30-90% by weight pure MDI with the balance being one or more polymethylene polyphenyl polyisocyanates. Pure MDI preferably comprises a mixture of isomers containing between 50 and 100% by weight of the 4,4'-isomer the balance being the 2,2' and 2,4' isomers.

As regards the polyoxyalkylene polyol this is suitably an alkylene oxide adduct of an alcohol selected from (1) low molecular weight diols, and triols or naturally occurring polyols and (2) non-reducing sugars and derivatives thereof. Examples of such adducts include the alkylene oxide adducts of ethylene glycol, propylene glycol, glycerol, the isomeric butanediols, hexanediols, octanediols and the like. Alkylene oxide adducts of pentaerythritol, sorbitol, arabitol, mannitol, alkyl glucoside, alkylene glycol glucosides and glycerol glucosides are also contemplated.

The alkylene oxide used to form the adduct is preferably one or more of ethylene oxide, propylene oxide and butylene oxide. However the polyalkylene glycol should comprise 1 to 80%, preferably at least 3 to 30% by weight, most preferably 10-20% by weight ethylene oxide. Most preferably a mixture of ethylene oxide and propylene oxide is used.

The polyoxyalkylene polyol has an average functionality in the range 1 to 8 preferably 2 to 4 and a molecular weight in the range 1,000 - 10,000 preferably 2,000 - 6,000.

The polymer of one or more vinyl monomers is preferably either polyacrylonitrile or a copolymer of styrene and acrylonitrile. However other vinyl monomers which do not react with isocyanate groups can also be used.

The polymer polyol used in the above composition consists of 50 to 90% by weight polyoxyalkylene polyol and 1 to 50% by weight polymer of one or more vinyl monomers. Preferably the polymer polyol consists of 65 to 95% by weight polyoxyalkylene polyol and 10 to 35% by weight of the polymer.

The polymer polyol can be prepared by standard processes e.g. polymerising one or more vinyl monomers in the polyoxyalkylene polyol at elevated temperature in the presence of a polymerisation initiator. In this respect there is incorporated herein the details of the processes described in GB 1412797, EP 137723 and EP 162589 for making polymer polyols.

The liquid isocyanate prepolymer can be stored and used alone or mixed with between 10 and 50% by weight of the diphenylmethane diisocyanate described above.

The liquid isocyanate prepolymer is prepared by reacting an appropriate amount of the diphenylmethane diisocyanate with the polymer polyol optionally in the presence of a base and optionally at elevated temperatures to complete the reaction. The amounts of each component used are chosen so that the liquid isocyanate prepolymer has an NCO content of from 10-30% by weight preferably 20-30%.

The liquid isocyanate prepolymers described above may be formulated with polyols, blowing agents, basic catalysts and optional additives such as surfactants, chain extenders foam stabilisers and the like to prepare cold cure flexible polyurethane foam.

According therefore to an embodiment of the present invention there is provided a process for preparing cold cure flexible polyurethane foam characterised in that the process comprises forumulating a liquid isocyanate prepolymer as defined above with one or more polyfunctional alcohols, a basic catalyst and a blowing agent.

Suitable polyfunctional alcohols which can be used in such a process are known in the art and are suitably polyoxyalkylene diols, triols or mixtures thereof. The basic catalyst is suitably an tertiary amine, eg DABCO M,N-dimethylethanolamine N,N-dimethylcyclohexylamine etc and/or a tin catalyst eg dibutyl tin dilaurate. The blowing agent can be either water or an appropriate fluorocarbon.

It is preferred that the molar ratio of isocyanate groups in the liquid isocyanate prepolymer or the mixture to the hydroxyl groups in the polyfunctional alcohol lies within the range 0.75:1 to 1.25:1 preferably 0.8:1 to 1.1 to 1.

The process is suitably operated at around ambient temperature or at temperatures up to 50°C.

The invention is now illustrated with reference to the following Examples.

## Example 1

### Preparation of the Prepolymer

800g of Isonate M309 (crude MDI - ex Dow Chemicals: 30% 4,4'-isomer of diphenylmethane diisocyanate, 10% 2,4-isomer and 60% polymethylene polyphenyl isocyanates) were blended with 200 g of a polymer polyol having an overall composition (a) 80% by weight of a polyoxyethyleneoxypropylene polyol comprising 14% ethylene oxide (MW = 2,00-6,000; average functionality = 2.7) and (b) 20% by weight polyacrylonitrile. The mixture was heated for 2 hours at 80°C. A prepolymer was formed having a free NCO content of 25% by weight.

## Example 2

A polyurethane foam formulation was prepared as shown in the Table using the prepolymer of Example 1. A metal mould 30x30x10 cm was used to prepare the moulded foam. Foaming and curing took place at 45°C. 20 minutes after demould, the dimensions of the mould foam were measured and the volume shrinkage calculated.

### Comparative Test A

Example 2 was repeated except that no polymer polyol was used and no prepolymerisation took place.

### Comparative Test B

Example 2 was repeated except that a polymer polyol was used but no prepolymerisation took place. (PAN = polyacrylonitrile).

The volume shrinkage tests for Example 2 comparative Test A and B clearly show an improved resistance to shrinkage when the prepolymer of the present invention is used indicating a mine open cellular structure.

0 276 927

| Foam Formulations (by weight): | Example/Comparative Test | | |
|---|---|---|---|
| | A | B | 4 |
| Triol OH 35, 78% 1°OH, (BP Chemicals) | 100 | 88 | 88 |
| Triol, OH 28, 78% 1°OH, 20% PAN (BP) | -- | 12 | -- |
| Water | 2.8 | 2.8 | 2.8 |
| A-1 (ex UCC, amine catalyst) | 0.05 | 0.05 | 0.05 |
| 331.V (ex Air Products, amine catalyst) | 0.6 | 0.6 | 0.6 |
| Polycat 77 (catalyst, ex Air products) | 0.6 | 0.6 | 0.6 |
| RS 117 (silicone surfactant, ex BP Chemicals) | 1.0 | 1.0 | 1.0 |
| Freon 11 (blowing agent) | 12 | 12 | 12 |
| Isonate M309 (crude MDI - ex Dow Chemicals) | 49 | 49 | - |
| Prepolymer according to (Example 1) | - | - | 62 |
| Shrinkage (%) | 41 | 30 | 5 |

## Claims

1. A liquid isocyanate prepolymer comprising the reaction product of a diphenylmethane diisocyanate and a polyol characterised in that the polyol is a polymer polyol comprising (1) 50 to 99% by weight of a polyoxyalkylene polyol having by weight of a polyoxyalkylene polyol having an average functionality in the range 1 to 8, a molecular weight in the range 1,000 to 10,000 and comprising 1 to 80% by weight ethylene oxide and (2) 1 to 50% by weight of a polymer of one or more vinyl monomers.

2. A liquid isocyanate prepolymer as claimed in claim 1 wherein the diphenylmethane diisocyanate is crude MDI consisting of a mixture of 30-90% by weight pure MDI with the balance being one ore more polymethenyl polyphenyl polyisocyanates.

3. A liquid isocyanate prepolymer as claimed in claim 1 wherein the diphenylmethane diisocyanate is pure MDI comprising between 50 and 100% by weight of the 4,4'-isomer.

4. A liquid isocyanate prepolymer as claimed in claim 1 wherein the polymer is either polyacrylonitrile or a copolymer of styrene and acrylonitrile.

5. A mixture consisting essentially of between 50 and 90% of a liquid isocyanate prepolymer as defined in claim 1 and between 10 and 50% of diphenylmethane diisocyanate.

6. A process for preparing cold cure flexible polyurethane foam characterised in that the process comprises formulating a liquid isocyanate prepolymer as defined in claim 1 with one or more polyfunctional alcohols, a basic catalyst and a blowing agent.

4